# EUROPÄISCHE PATENTANMELDUNG

(11) **EP 2 100 649 A1**
(43) Veröffentlichungstag der Anmeldung: **16.09.2009**
(21) Anmeldenummer: 08004672.5
(22) Anmeldetag: 13.03.2008
(51) Int. Cl.: B01D 1/22

(54) **Dünnschichtverdampfer**

(71) Anmelder: Buss-SMS-Canzler GmbH, 35510 Butzbach (DE)
(72) Erfinder: Büchel, Heinz-Gerd, 61231 Bad Nauheim (DE); Brenner, Klaus, 61389 Schmitten (DE)
(74) Vertreter: Steinegger, Peter

(57) **Zusammenfassung**

Die vorliegenden Erfindung betrifft einen Dünnschichtverdampfer umfassend ein einen Innenraum 6 umschliessendes Verdampfergehäuse 4 mit einer wenigstens annähernd horizontalen Längsachse, das zwei sich einander gegenüberliegende Seitenwände 14, 16 und eine zwischen den Seitenwänden 14, 16 angeordnete Mantelwand 8 umfasst, wobei eine der Seitenwände 14, 16 mit der Mantelwand 8 lösbar verbunden ist. Der Dünnschichtverdampfer umfasst weiter einen in den Innenraum 6 führenden Materialzulauf 26, einen aus dem Innenraum 6 führenden Materialablauf 28, einen im Innenraum 6 angeordneten, wenigstens annähernd koaxial zur Längsachse drehbar gelagerten Rotor 36 und eine durch eine der beiden Seitenwände 14, 16 geführte, mit dem Rotor 36 verbundene Antriebswelle 34. Dabei sind nur der Seitenwand 14, durch die die Antriebswelle 34 geführt ist, Lager 46a, 46b zur Lagerung der Antriebswelle 34 und des Rotors 36 zugeordnet. Die Seitenwand 14, der die Lager 46a, 46b zugeordnet sind, ist erfindungsgemäss lösbar mit der Mantelwand 8 verbunden.

## Beschreibung

Die vorliegende Erfindung betrifft einen Dünnschichtverdampfer gemäss dem Oberbegriff des Anspruchs 1 sowie die Verwendung des Dünnschichtverdampfers zur Behandlung eines pharmazeutischen Produkts oder Lebensmittels gemäss Anspruch 13.

Als Dünnschichtverdampfung wird ein Verfahren zur thermischen Auftrennung von Stoffen aus einem mechanisch erzeugten, dünnen und hochturbulenten Flüssigkeitsfilm bezeichnet. Diese Verfahren werden in entsprechend ausgestalteten Vorrichtungen, sogenannten Dünnschichtverdampfern, durchgeführt.

Bekannte Dünnschichtverdampfer umfassen ein Verdampfergehäuse und einen im Verdampfergehäuse angeordneten Rotor. Das Verdampfergehäuse weist einen Materialzulauf zum Einführen des zu behandelnden Stoffgemischs und ein Materialablauf zum Ausführen des Verdampfungsrückstands auf. Der Rotor verteilt das Stoffgemisch auf einer Verdampferfläche. Die dabei freiwerdenden Dämpfe (auch "Brüden" genannt) werden über einen separaten Dampfabzug aus dem Verdampfergehäuse ausgeführt.

In der Regel wird die Verdampferfläche von der Innenfläche des Verdampfergehäuses gebildet, welche im Allgemeinen beheizt ist. Das darauf vom Rotor verteilte Stoffgemisch befindet sich in einem hochturbulenten Zustand, wobei ein intensiver Wärmeaustausch mit der Verdampferfläche stattfindet. Alternativ zu diesen Dünnschichtverdampfern sind auch solche bekannt, in denen die Verdampferfläche vom Rotor gebildet wird.

Je nach Lage der Längsachse des Verdampfergehäuses und des Rotors unterscheidet man horizontale und vertikale Dünnschichtverdampfer. Beispiele dafür stellen etwa die Dünnschichtverdampfer des Typs "SAKO-KH" (horizontal) bzw. "SAKO-KV" (vertikal) dar (beide von der Firma Buss-SMS-Canzler GmbH).

Dünnschichtverdampfer, deren Achse horizontal ausgerichtet werden kann, werden etwa in DE-A-3401121 und in DE-A-3418982 offenbart.

DE-A-3401121 offenbart einen Dünnschichtverdampfer mit einem einen Innenraum umschliessenden Behälter und einer stirnseitig aufgesetzten Antriebseinheit, die eine in den Innenraum ragende Antriebswelle in Drehung versetzt. Die Antriebswelle weist an ihrem Ende einen Tragflansch auf, an dem ein Rotor befestigt ist.

DE-A-3418982 offenbart einen Dünnschichtverdampfer umfassend einen einen Deckel aufweisenden Behälter, der einen Brüdenraum bildet, und eine in den Brüdenraum hineinragende Antriebswelle. Die Antriebswelle ist über eine axial lösbare Kupplung mit einer Hohlachse verbunden, an der ein Rotor befestigt ist und die auf einer in den Behälter hineinragenden, feststehenden Achse gelagert ist. Besagte Druckschrift offenbart zudem eine Ausführungsform, in der die Antriebswelle durch eine Hohlachse hindurch geführt ist. In allen Ausführungsformen ist die Hohlachse auf der dem Deckel gegenüberliegenden Seite abgestützt.

Die oben genannten Dünnschichtverdampfer des Standes der Technik weisen den Nachteil auf, dass die flüssigkeitsberührten Teile, d.h. insbesondere der Rotor und die Innenwand des Verdampfergehäuses, nur unter vollständiger Demontage des Dünnschichtverdampfers zugänglich sind. Eine unmittelbare Reinigung dieser Teile lässt sich somit nur mit sehr hohem Aufwand bewerkstelligen. Zudem ist die Möglichkeit der Inspektion des Innenraums lediglich auf diejenigen Bereiche beschränkt, an denen entsprechende Schauglasöffnungen angeordnet sind.

Die Aufgabe der vorliegenden Erfindung ist es somit, einen horizontalen Dünnschichtverdampfer zur Verfügung zu stellen, dessen im Innenraum des Verdampfergehäuses befindlichen Teile, und insbesondere dessen flüssigkeitsberührte Teile, leicht zugänglich sind.

Erfindungsgemäss wird diese Aufgabe durch den Gegenstand des Anspruchs 1 gelöst. Bevorzugte Ausführungsformen der Erfindung sind in den abhängigen Ansprüchen definiert.

Der Dünnschichtverdampfer der vorliegenden Erfindung umfasst ein Verdampfergehäuse mit wenigstens annähernd horizontaler Achse. Somit werden vom Patentanspruch sowohl Dünnschichtverdampfer mit genau in der Horizontalen ausgerichteter Achse umfasst, als auch solche, deren Achse leicht aus der Horizontalen geneigt ist.

Erfindungsgemäss ist die Antriebswelle lediglich durch eine erste der beiden Seitenwände des Verdampfergehäuses geführt. Nur dieser ersten Seitenwand sind Lager zur Lagerung der Antriebswelle und des Rotors zugeordnet, das heisst, dass die Antriebswelle und der Rotor einseitig oder fliegend gelagert sind.

Der erfindungsgemässe Dünnschichtverdampfer ist **dadurch gekennzeichnet, dass** die besagte erste Seitenwand lösbar mit der Mantelwand verbunden ist.

Somit kann bei gelöster Seitenwand der mit der Antriebswelle verbundene Rotor aus dem Innenraum des Verdampfergehäuses herausgeführt werden, wodurch die sich im Innenraum befindlichen Teile und insbesondere die flüssigkeitsberührten Teile - etwa zu Reinigungs- oder Inspektionszwecken - auf sehr einfache Art und Weise zugänglich gemacht werden. Eine vollständige Demontage des Dünnschichtverdampfers ist dazu folglich nicht notwendig.

Dadurch, dass der erfindungsgemässe Dünnschichtverdampfer sehr einfach und gründlich inspiziert und gereinigt werden kann, eignet er sich idealerweise für die Behandlung pharmazeutischer Produkte oder Lebensmittel, da insbesondere für diese sehr hohe Reinheitserfordernisse eingehalten werden müssen. Die Anwendung des erfindungsgemässen Dünnschichtverdampfers ist aber nicht auf die Behandlung der genannten Produkte beschränkt. So ist der erfindungsgemässe Dünnschichtverdampfer beispielsweise auch für die Behandlung von Feinchemikalien, Produkten der Oleo-Chemie usw. geeignet.

Für die Reinigung des Dünnschichtverdampfers sind in der Regel sogenannte CIP-Anschlüsse ("Clean-In-Place"-Anschlüsse) vorgesehen, die dem Fachmann bekannt sind.

Die erfindungsgemäss gegenüber dem Stand der Technik erzielten Vorteile kommen insbesondere dann zur Geltung, wenn ein häufiger Wechsel des in den Dünnschichtverdampfer eingeführten Stoffgemischs vorliegt, da dabei mögliche Restkontaminationen einfach festgestellt und entfernt werden können.

Um ein sehr einfaches Verbinden und Ablösen der ersten Seitenwand von der Mantelwand zu ermöglichen, ist diese im Allgemeinen mit der Mantelwand über Flanschverbindungen verbunden. Hierzu können auch etwa dem Fachmann bekannte Spannhebelverschlüsse oder Zentralverschlüsse verwendet werden.

Gemäss einer bevorzugten Ausführungsform der Erfindung wird ein einfaches Herausführen des Rotors dadurch gewährleistet, dass die erste Seitenwand auf einem in Richtung der Längsachse des Verdampfergehäuses beweglichen Fahrgestell angeordnet ist. Die Mantelwand und die der ersten Seitenwand gegenüberliegende zweite Seitenwand sind dabei im Allgemeinen stationär. Ist die besagte erste Seitenwand von der Mantelwand gelöst, wird somit bei entsprechender Verschiebung des Fahrgestells die Seitenwand samt den dieser zugeordneten Lagern verschoben und die Antriebswelle und der Rotor, die von den Lagern getragen werden, aus dem Innenraum des Verdampfergehäuses herausgeführt.

Alternativ dazu kann die Mantelwand zusammen mit der der ersten Seitenwand gegenüberliegenden zweiten Seitenwand in Richtung der Längsachse der Mantelwand verschiebbar sein, etwa indem sie über Schienen, die oberhalb und/oder unterhalb der Mantelwand angeordnet sind, geführt werden. In der Regel ist die erste Seitenwand in dieser Ausführungsform stationär. Allerdings ist denkbar, auch in dieser Ausführungsform die erste Seitenwand auf dem oben beschriebenen beweglichen Fahrgestell anzuordnen.

Der Rotor ist in der Regel drehfest mit der Antriebswelle verbunden. Denkbar ist etwa, dass der Rotor eine Hohlachse aufweist, die drehfest auf die Antriebswelle aufgesteckt ist. Weiter ist denkbar, dass der Rotor über eine axial lösbare Kupplung, etwa eine Steckkupplung, an der Antriebswelle befestigt ist.

Gemäss einer bevorzugten Ausführungsform wird der Rotor ausschliesslich von der Antriebswelle getragen. Dabeierfolgt die Lagerung des Rotors lediglich über die Lagerung der Antriebswelle. Alternativ dazu ist auch denkbar, dass der Dünnschichtverdampfer für die Antriebswelle und für den Rotor jeweils separate Lager aufweist.

In der Regel sind für die Lagerung der Antriebswelle und des Rotors zwei voneinander beabstandete Lager vorgesehen, um eine optimale Abstützung zu gewährleisten. Gemäss einer bevorzugten Ausführungsform sind die Lager in einem Tragrohr ausserhalb des Verdampfergehäuses angeordnet. Als Lager kommen beispielsweise dem Fachmann bekannte Wälzlager in Betracht.

Die Antriebswelle wird in der Regel gegenüber der Seitenwand, durch die sie geführt ist, mittels einer Dichtung, insbesondere einer Gleitringdichtung, abgedichtet. Da erfindungsgemäss die Antriebswelle nur durch eine Seitenwand geführt ist, wird lediglich eine Dichtung benötigt. Dabei können alle dem Fachmann bekannten Dichtungen, beispielsweise eine Packungs- oder Lippendichtung, verwendet werden. Vorzugsweise kommen Gleitringdichtungen zum Einsatz, die nach dem Thermosiphonprinzip mit Flüssigkeit beaufschlagt werden. Besonders bevorzugt ist eine "Back to back"-Anordnung. Diese erlaubt den Einsatz von Sperrsystemen ohne Zwangsförderung der Flüssigkeit. Weiter kann etwa eine ein Lager und eine Gleitringdichtung umfassende Kartusche verwendet werden. Die genannten Gleitringdichtungen sind dem Fachmann bekannt.

Im Allgemeinen wird die Verdampferfläche des erfindungsgemässen Dünnschichtverdampfers von der Innenfläche der Mantelwand gebildet. Diese ist in der Regel beheizt.

Der Materialzulauf für die Zuführung des zu behandelnden Materials kann in Form eines durch die Wand des Verdampfergehäuses hindurchführenden Materialzulaufs ausgebildet sein. Alternativ dazu ist auch denkbar, dass der Materialzulauf durch die Antriebswelle hindurchführt. Dabei wird das zu behandelnde Material vorzugsweise mittels an der Antriebswelle und/oder am Rotor angeordneter, mitrotierender Düsen auf die Verdampferfläche verteilt, wodurch insbesondere bei der Verarbeitung von überhitzten Flüssigkeiten ein günstiges Verdampfungsverhalten erzielt wird.

Um zu gewährleisten, dass das zu behandelnde Stoffgemisch in einem möglichst dünnen Flüssigkeitsfilm auf der Verdampferfläche verteilt wird, weist der Rotor vorzugsweise Rotorblätter und/oder Rotorschalen auf, die annähernd an die Innenfläche der Mantelwand ragen. Als Rotor wird vorzugsweise ein berührungsfreier Starrflügelblatt-Rotor mit definierter Spaltweite zur Innenfläche verwendet. Hinsichtlich der Rotorblätter des Rotors kommt vorzugsweise ein Glattblattrotor oder ein Schalenrotor zur Anwendung. Beide Rotortypen weisen den Vorteil auf, dass die Ablagerung von Produkt auf den Rotorblättern minimal ist und dass sie sehr einfach gereinigt werden können. Alternativ dazu ist jeder andere Rotortyp denkbar, beispielsweise also auch ein Losblattrotor.

Um das umlaufende Kragmoment zu begrenzen, beträgt das Verhältnis der Achsenlänge des Rotors zum Durchmesser des Rotors vorzugsweise ungefähr 1:1.

Vorzugsweise liegt der Durchmesser des Verdampferkörpers (und somit in der Regel auch annähernd der Durchmesser des Rotors) in einem Bereich von 250 mm bis 2000 mm, besonders bevorzugt von 600 mm bis 1400 mm. Die Verdampferfläche liegt in der Regel in einem Bereich von etwa 0.2 m² bis etwa 12 m².

Entsprechend dem bevorzugten Verhältnis der Achsenlänge des Rotors zum Durchmesser des Rotors liegt die Achslänge des Rotors somit vorzugsweise in einem Bereich von etwa 255 mm bis etwa 1910 mm.

Im Allgemeinen ist die Antriebswelle mit einer Antriebseinheit verbunden. Dabei ist etwa ein Getriebemotor denkbar, der die Antriebswelle über einen Riemen, z.B. einen Keil- oder Zahnriemen, in Drehung versetzt. Alternativ dazu kann die Antriebseinheit als direkt angeflanschter Getriebemotor, zum Beispiel mit einem Kegelradgetriebe, mit Zwischenkupplung vorgesehen sein. Dabei ist sowohl ein Winkelantrieb als auch ein Längsantrieb denkbar.

Vorzugsweise wird die Antriebseinheit durch eine schallreduzierende Haube abgedeckt und gegen Spritzwasser abgedichtet. Die Haube ist bevorzugt aus Edelstahlblech gefertigt. Gemäss einer weiteren bevorzugten Ausführungsform ist die Antriebseinheit auf dem oben beschriebenen Fahrgestell angeordnet, was ein Herausführen der Antriebswelle und des daran angeordneten Rotors aus dem Verdampfergehäuse vereinfacht.

Die Rotordrehzahlen entsprechen im Allgemeinen den Rotordrehzahlen des dem Fachmann bekannten Dünnschichtverdampfers vom Typ SAKO-KH. Allerdings weisen die erfindungsgemäss verwendeten Rotoren gegenüber denjenigen, die in Dünnschichtverdampfern des SAKO-KH-Typs verwendet werden, in der Regel eine kürzere Achsenlänge auf, sodass das erforderliche Antriebsmoment für die erfindungsgemässen Dünnschichtverdampfer geringer ist. Somit können erfindungsgemäss für die Antriebseinheit Elektromotoren mit geringerer Leistung verwendet werden, als dies etwa für die bekannten Dünnschichtverdampfer des SAKO-KH-Typs der Fall ist.

Gemäss einer besonders bevorzugten Ausführungsform ist die der ersten Seitenwand gegenüberliegende zweite Seitenwand mit der Mantelwand lösbar und/oder schwenkbar verbunden. Durch Öffnen des dadurch gebildeten Deckels sind von der Seitenwand mit den Lagern entfernte Bereiche im Innenraum des Verdampfergehäuses selbst dann zugänglich, wenn der Rotor nicht vollständig aus dem Verdampfergehäuse herausgeführt ist.

Vorzugsweise ist die mindestens eine mit der Mantelwand lösbar verbundenen Seitenwand mittels eines ringförmigen Dichtungselements (kurz auch "O-Ring" genannt) gegenüber der Mantelwand abgedichtet, um selbst bei einem relativ geringen Kraftschluss eine hohe Dichtigkeit des geschlossenen Verdampfergehäuses zu gewährleisten. In der Regel sind die O-Ringe in einer Nut des jeweiligen Flansches der Mantelwand bzw. der Seitenwand eingebettet, was gegenüber den leicht verrutschenden Flachdichtungen den Vorteil mit sich bringt, dass sie durch die Flansche in ihrer Position fixiert werden. Das Material der O-Ringe wird nach ihrer Eignung auf die betreffenden Lösungsmittel hin ausgewählt. In der Regel bestehen die verwendeten O-Ringe aus einem Fluorelastomer, wie beispielsweise VITON® (DuPont Performance Elastomers), das wahlweise mit Polytetrafluorethylen ummantelt ist.

Da die mit dem erfindungsgemässen Dünnschichtverdampfer idealerweise behandelten pharmazeutischen Produkte oder Lebensmittel in der Regel temperaturempfindlich sind, wird für die Dünnschichtverdampfung dieser Produkte in der Regel eine geringe bis moderate Temperatur von etwa -20°C bis etwa 100°C eingestellt. Bevorzugt wird für die Behandlung von pharmazeutischen Produkten, die im Allgemeinen in leichtsiedenden, organischen oder anorganischen Lösungsmitteln gelöst sind, eine Temperatur von etwa -5°C bis etwa 40°C eingestellt.

Die Mantelwand ist vorzugsweise mindestens teilweise als Doppelwand ausgebildet. Die Heizung der die Verdampferfläche bildenden Innenfläche der Mantelwand wird dabei in der Regel mittels eines Heizmittels gewährleistet, welches in den von der Doppelwand umschlossenen Zwischenraum eingeführt wird. Alternativ zur Ausführungsform mit der Doppelwand sind zum Beispiel auch dem Fachmann bekannte Thermoblech-Wärmetauscher denkbar.

Das Verdampfergehäuse, der Rotor und die Antriebswelle sind in der Regel aus rostfreiem Stahl gefertigt oder mit rostfreiem Stahl verkleidet, wobei insbesondere die flüssigkeitsberührten Teile eine hohe Oberflächengüte mit geringer Rautiefe Ra ≤ 0,8 µm aufweisen.

Gemäss einer bevorzugten Ausführungsform ist die Längsachse des Verdampfergehäuses in Richtung zum Materialablauf aus der Horizontalen nach unten geneigt, sodass eine Selbstentleerung zum Materialablauf hin erreicht wird.

Das Verdampfergehäuse kann sowohl kreiszylinderförmig als auch konisch ausgebildet sein. Bei der zweitgenannten Ausführungsform verjüngt sich der Konus in Richtung vom Materialzulauf zum Materialablauf. Der Rotor ist der Form des Verdampfergehäuses entsprechend angepasst.

Die Mantelwand weist zur Isolierung wahlweise eine dicht verschweisste Edelstahlblech-Verkleidung auf, was eine uneingeschränkte äussere Reinigung des Verdampfergehäuses ermöglicht.

Um zudem die Inspektion während des Betriebs des Dünnschichtverdampfers zu gewährleisten, weist die der ersten Seitenwand gegenüberliegende zweite Seitenwand vorzugsweise eine Schauglasöffnung und wahlweise eine Beleuchtungseinrichtung auf.

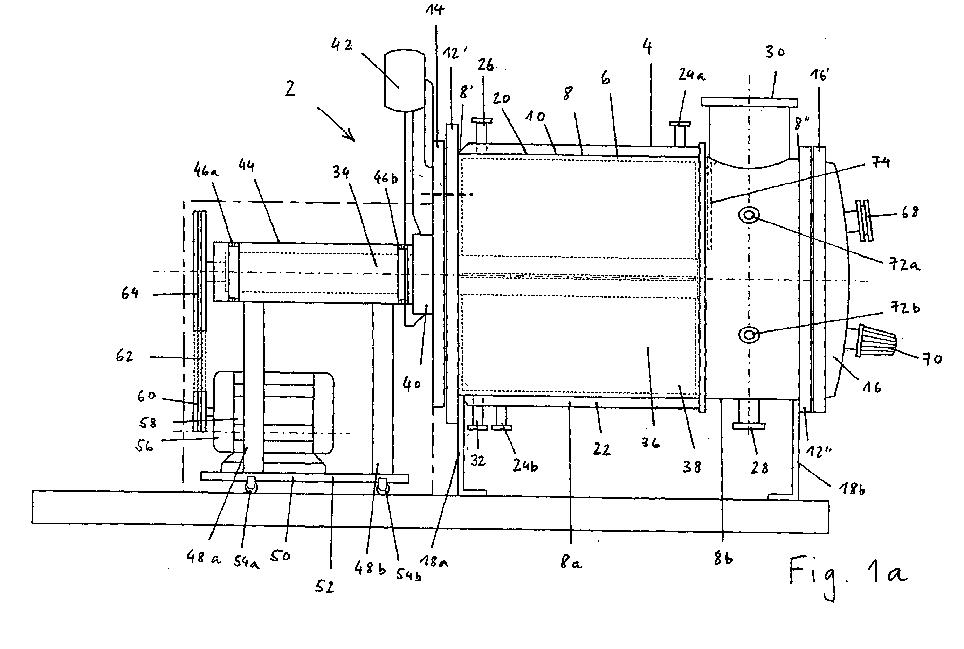

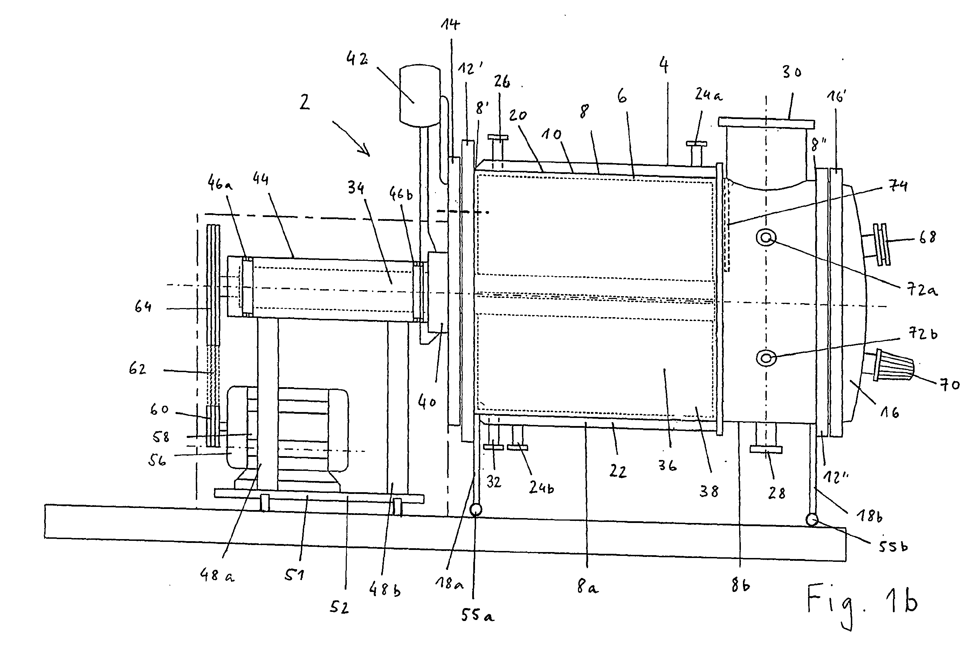

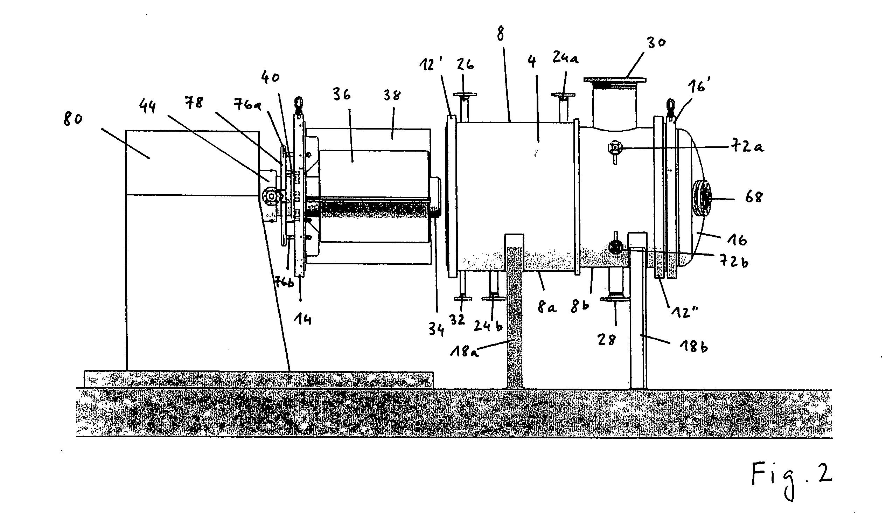

Die Erfindung wird weiter anhand der angefügten Fig. 1a, 1b und 2 beschrieben. Es zeigen rein schematisch
Fig. 1a in einer Seitenansicht einen erfindungsgemässen Dünnschichtverdampfer, in dem die erste Seitenwand, der die Lager zugeordnet sind, auf einem in Richtung der Längsachse des Verdampfergehäuses beweglichen Fahrgestell angeordnet ist,
Fig. 1b in einer Seitenansicht einen weiteren erfindungsgemässen Dünnschichtverdampfer, in dem die Mantelwand zusammen mit der der ersten Seitenwand gegenüberliegenden zweiten Seitenwand in Richtung der Längsachse des Verdampfergehäuses verschiebbar ist, und
Fig. 2 in einer Seitenansicht einen erfindungsgemässen Dünnschichtverdampfer mit herausgeführtem Rotor.

Gemäss Fig. 1a umfasst der Dünnschichtverdampfer 2 ein im Wesentlichen kreiszylinderförmiges Verdampfergehäuse 4, das einen Innenraum 6 umschliesst. Das Verdampfergehäuse 4 umfasst eine Mantelwand 8, deren Innenfläche 10 die Verdampferfläche des Dünnschichtverdampfers bildet. An den beiden Enden 8', 8" der Mantelwand 8 ist jeweils ein Flansch 12', 12" ausgebildet. Die Mantelwand 8 wird am einen Ende 8' über den Flansch 12' durch die erste Seitenwand 14 und am anderen Ende 8" über den Flansch 12" durch die zweite Seitenwand 16 verschlossen. Die erste Seitenwand 14 ist im Wesentlichten eben ausgebildet, während die zweite Seitenwand 16 nach aussen gewölbt ist und in ihrem Randbereich einen weiteren Flansch 16' zur Verbindung mit dem Flansch 12" der Mantelwand 8 aufweist. Das Verdampfergehäuse 4 wird mittels zweier Stützelemente 18a, 18b gegen einen Untergrund abgestützt.

Die Mantelwand 8 weist einen der ersten Seitenwand 14 zugewandten ersten Abschnitt 8a und einen der zweiten Seitenwand 16 zugewandten zweiten Abschnitt 8b auf. Der erste Abschnitt 8a der Mantelwand 8 ist als Doppelwand 20 ausgebildet, während der zweite Abschnitt 8b einwandig ausgebildet ist, wodurch der äussere Durchmesser des ersten Abschnittes 8a grösser ist als derjenige des zweiten Abschnittes 8b. Zu dem von der Doppelwand 20 des ersten Abschnitts 8a umschlossenen Zwischenraum 22 führen Anschlussstutzen 24a, 24b, mittels welcher ein Heizmittel ein- oder ausgeführt werden kann.

In dem der ersten Seitenwand 14 benachbarten Randbereich des ersten Abschnitts 8a der Mantelwand 8 führt ein Materialzulauf 26 zur höchstliegenden Region im Innenraum 6 des Verdampfergehäuses 4. Im zweiten Abschnitt 8b der Mantelwand 8 führt ein Materialablauf 28 von der tiefstliegenden Region aus dem Innenraum 6 heraus. Sowohl Materialzulauf 26 als auch Materialablauf 28 sind in Form eines rechtwinklig zur Längsachse des Verdampfergehäuses 4 verlaufenden Stutzens ausgebildet.

Am zweiten Abschnitt 8b der Mantelwand 8 ist ein Dampfabzugsrohr 30 angeordnet, das von der höchstliegenden Region des Innenraums 6 aus diesem herausführt. Weiter ist am ersten Abschnitt 8a der Mantelwand 8 ein Ablaufstutzen 32 angeordnet, der von der tiefstliegenden Region des Innenraums 6 aus diesem herausführt und über den der Innenraum 6 bei Bedarf vollständig entleert werden kann.

Durch die erste Seitenwand 14 ist mittig eine Antriebswelle 34 geführt, die raumseitig mit einem Rotor 36 drehfest verbunden ist. Der Rotor 36 ist im geschlossenen Zustand des Verdampfergehäuses 4 in dem vom ersten Abschnitt 8a der Mantelwand 8 umschlossenen Bereich des Innenraums 6 angeordnet. Die Rotorblätter 38 des Rotors 36 ragen von einer Rotorachse bis nahe an die Innenfläche 10 der Mantelwand 8 heran.

Die Antriebswelle 34 ist gegenüber der ersten Seitenwand 14 mit einer dieser zugeordneten Gleitringdichtung 40 abgedichtet, die mit einem Sperrflüssigkeitssystem 42 für die Gleitringdichtung 40 verbunden ist. Ausserhalb des Verdampfergehäuses 4 schliesst an die Gleitringdichtung 40 ein mit einer ersten Stirnseite der ersten Seitenwand 14 zugewandtes Tragrohr 44 an, in welchem zwei voneinander beabstandete Lager 46a, 46b angeordnet sind, die die Antriebswelle 34 und den mit ihr drehfest verbundenen Rotor 36 tragen.

Das Tragrohr 44 mit den darin angeordneten Lagern 46a, 46b und der von diesen getragenen Antriebswelle 34 wird über zwei Stützelemente 48a, 48b auf einem Fahrgestell 50 abgestützt, welches eine Tragplatte 52 und vier daran angeordnete Räder aufweist, von denen zwei Räder 54a, 54b gezeigt sind. Auf dem Fahrgestell 50 ist zudem eine Antriebseinheit 56 angeordnet. Die Antriebseinheit 56 umfasst einen Elektromotor 58, dessen Abtriebsrad 60 über einen Riemen 62 mit dem Antriebsrad 64 für die Antriebswelle 34 verbunden ist.

Die in Fig. 1b gezeigte Ausführungsform unterscheidet sich von der in Fig. 1a gezeigten dadurch, dass die Mantelwand 8 zusammen mit der der ersten Seitenwand 14 gegenüberliegenden zweiten Seitenwand 16 in Richtung der Längsachse der Mantelwand 8 verschiebbar ist. Dazu sind an den Stützelementen 18a, 18b Räder 55a bzw. 55b angeordnet. Denkbar wäre etwa auch, dass die Mantelwand 8 mit der zweiten Seitenwand 16 über Schienen, die oberhalb und/oder unterhalb der Mantelwand 8 angeordnet sind, geführt wird. Gemäss Figur 1b ist das Tragrohr 44 mit den darin angeordneten Lagern 46a, 46b und der von diesen getragenen Antriebswelle 34 über zwei Stützelemente 48a, 48b auf einem stationären Gestell 51 abgestützt. Alternativ dazu ist aber auch denkbar, dass auch in dieser Ausführungsform statt eines stationären Gestells ein Fahrgestell 50 wie in Fig. 1a gezeigt vorliegt.

Sowohl gemäss der in Fig. 1a als auch gemäss der in Fig. 1b gezeigten Ausführungsform ist in der zweiten Seitenwand 16 eine Schauglasöffnung 68 und eine Beleuchtungseinrichtung 70 zur Inspektion des Innenraums 6 während des Betriebs des Dünnschichtverdampfers 2 angeordnet.

Zur Reinigung des Innenraums weist das Verdampfergehäuse 4 im zweiten Abschnitt 8b der Mantelwand 8 sogenannte CIP-Anschlüsse 72a, 72b auf.

Im Bereich zwischen dem ersten Abschnitt 8a und dem zweiten Abschnitt 8b der Mantelwand 8 ist im Innenraum 6 des Verdampfergehäuses 4 zudem ein Umlenkblech 74 zur Tröpfchenabscheidung angeordnet. Dieses gewährleistet, dass die durch das Dampfabzugsrohr 30 abgezogenen Brüden im Wesentlichen frei von flüssigen Komponenten sind.

Wie insbesondere aus Fig. 2 ersichtlich ist, umfasst der Rotor 36 Rotorblätter 38 in Form von ebenen Platten, die sich im Wesentlichen in einer Ebene parallel zur Längsachse des Rotors 36 bzw. der Antriebswelle 34 erstrecken. Die Antriebswelle 34 wird gegenüber der ersten Seitenwand 14, durch die sie geführt ist, mittels einer Gleitringdichtung 40 abgedichtet. Die erste Seitenwand 14 ist über Stützbolzen 76a, 76b mit einer parallel zur ersten Seitenwand 14 ausgerichteten Tragplatte 78 verbunden, welche ihrerseits mit dem Tragrohr 44, in welchem die Antriebswelle 34 gelagert ist, verbunden ist. In Fig. 2 ist das in Fig. 1a dargestellte Fahrgestell 50 bzw. das in Fig. 1b dargestellte stationäre Gestell 51 mit der an diesem angeordneten Antriebseinheit 56 durch eine Haube 80 abgedeckt. Diese ist im Allgemeinen schallreduzierend und dichtet die Antriebseinheit 56 gegen Spritzwasser ab.

Betriebsgemäss wird das zu behandelnde Stoffgemisch über den Materialzulauf 26 in den Innenraum 6 des Verdampfergehäuses 4 eingeführt und vom Rotor 36 erfasst. Dieser verteilt das Stoffgemisch auf der die Verdampferfläche bildenden Innenfläche 10 der Mantelwand 8 in Form eines dünnen, sich in einem hochturbulenten Zustand befindlichen Flüssigkeitsfilms. Dabei verdampfen die tiefersiedenden Komponenten. Die entstehenden Brüden werden über das Dampfabzugsrohr 30 abgezogen. Allfällige mitgerissene flüssige Komponenten, in Form von z.B. Tröpfchen oder Schaum, in den Brüden werden durch das Umlenkblech 74 abgeschieden und mit der im Verdampfergehäuse 4 vorliegenden flüssigen Komponente vereint. Der von den tiefersiedenden Komponenten befreite Verdampfungsrückstand wird von der Innenwand über den Materialablauf 28 aus dem Dünnschichtverdampfer 2 ausgeführt.

Um die flüssigkeitsberührten Teile - insbesondere die Innenfläche 10 der Mantelwand 8 und den Rotor 36 - zu inspizieren oder zu reinigen, wird die erste Seitenwand 14 von der Mantelwand 8 gelöst. Durch entsprechende Verschiebung der ersten Seitenwand mit der dieser zugeordneten Lager 46a, 46b in Richtung der Längsachse des Verdampfergehäuses 4 wird die von den Lagern getragene Antriebswelle 34 zusammen mit dem mit der Antriebswelle 34 drehfest verbundenen Rotor 36 mittels des Fahrgestells 50 aus dem Innenraum 6 herausgeführt, wie in Fig. 2 veranschaulicht ist. Nach der Inspektion bzw. Reinigung wird die Seitenwand 14 zusammen mit der Antriebswelle 34 und dem Rotor 36 in ihre betriebsgemässe Position zurückgeführt und mittels z.B. eines Spannhebel- oder Zentralverschlusses mit der Mantelwand 8 wieder verbunden. Nebst der gezeigten Ausführungsform mit im Wesentlichen kreiszylinderförmigem Verdampfergehäuse 4 ist auch denkbar, dass das Verdampfergehäuse die Form eines sich in Richtung vom Materialzulauf 26 zum Materialablauf 28 hin verjüngenden Konus aufweist.

Zudem kann alternativ zu dem gezeigten, genau in der Horizontalen ausgerichteten Verdampfergehäuse 4 dieses in Richtung vom Materialzulauf 26 zum Materialablauf 28 hin aus der Horizontalen leicht nach unten geneigt sein, um eine entsprechende Förderung des Stoffgemisches zu begünstigen.

Weiter ist denkbar, einen Rotor 36 zu verwenden, dessen Rotorblätter 38 derart ausgebildet sind, dass er eine Förderung des Stoffgemisches vom Materialzulauf 26 zum Materialablauf 28 hin begünstigt.

## Patentansprüche

1. Dünnschichtverdampfer umfassend ein einen Innenraum (6) umschliessendes Verdampfergehäuse (4) mit einer wenigstens annähernd horizontalen Längsachse, das zwei sich einander gegenüberliegende Seitenwände (14, 16) und eine zwischen den Seitenwänden angeordnete Mantelwand (8) umfasst, wobei eine der Seitenwände (14) mit der Mantelwand (8) lösbar verbunden ist, einen in den Innenraum (6) führenden Materialzulauf (26), einen aus dem Innenraum (6) führenden Materialablauf (28), einen im Innenraum (6) angeordneten, wenigstens annähernd koaxial zur Längsachse drehbar gelagerten Rotor (36) und eine durch eine der beiden Seitenwände (14) geführte, mit dem Rotor (36) verbundene Antriebswelle (34), wobei nur der Seitenwand (14), durch die die Antriebswelle (34) geführt ist, Lager (46a, 46b) zur Lagerung der Antriebswelle (34) und des Rotors (36) zugeordnet sind, **dadurch gekennzeichnet, dass** die Seitenwand (14), der die Lager (46a, 46b) zugeordnet sind, lösbar mit der Mantelwand (8) verbunden ist.

2. Dünnschichtverdampfer nach Anspruch 1, **dadurch gekennzeichnet, dass** der Rotor (36) von der Antriebswelle (34) getragen ist.

3. Dünnschichtverdampfer nach Anspruch 1 oder 2, **dadurch gekennzeichnet, dass** die Seitenwand (14), der die Lager (46a, 46b) zugeordnet sind, auf einem in Richtung der Längsachse des Verdampfergehäuses (4) beweglichen Fahrgestell (50) angeordnet ist.

4. Dünnschichtverdampfer nach einem der vorgehenden Ansprüche, **dadurch gekennzeichnet, dass** die Antriebswelle (34) mit einer Antriebseinheit (56) verbunden ist.

5. Dünnschichtverdampfer nach den Ansprüchen 3 und 4, **dadurch gekennzeichnet, dass** die Antriebseinheit (56) auf dem Fahrgestell (50) angeordnet ist.

6. Dünnschichtverdampfer nach einem der vorhergehenden Ansprüche, **dadurch gekennzeichnet, dass** die Mantelwand (8) zusammen mit der der Seitenwand (14), der die Lager (46a, 46b) zugeordnet sind, gegenüberliegenden Seitenwand (16) in Richtung der Längsachse des Verdampfergehäuses (4) verschiebbar ist.

7. Dünnschichtverdampfer nach einem der vorhergehenden Ansprüche, **dadurch gekennzeichnet, dass** die Mantelwand (8) kreiszylinderförmig oder konisch ist.

8. Dünnschichtverdampfer nach einem der vorhergehenden Ansprüche, **dadurch gekennzeichnet, dass** die Lager (46a, 46b) in einem Tragelement, insbesondere in einem Tragrohr (44), ausserhalb des Verdampfergehäuses (4) angeordnet sind und dass die Antriebswelle (34) mittels einer Dichtung, insbesondere einer Gleitringdichtung (40), gegenüber der Seitenwand (14), durch die die Antriebswelle (34) geführt ist, abgedichtet ist.

9. Dünnschichtverdampfer nach einem der vorhergehenden Ansprüche, **dadurch gekennzeichnet, dass** der Rotor (36) Rotorblätter und/oder Rotorschalen (38) aufweist, die annähernd an die Innenfläche (10) der Mantelwand (8) ragen.

10. Dünnschichtverdampfer nach einem der vorhergehenden Ansprüche, **dadurch gekennzeichnet, dass** das Verhältnis der Achsenlänge des Rotors (36) zum Durchmesser des Rotors ungefähr 1:1 beträgt.

11. Dünnschichtverdampfer nach einem der vorhergehenden Ansprüche, **dadurch gekennzeichnet, dass** die der Seitenwand (14), der die Lager (46a, 46b) zugeordnet sind, gegenüberliegende Seitenwand (16) mit der Mantelwand (8) lösbar und/oder schwenkbar verbundenen ist.

12. Dünnschichtverdampfer nach einem der vorhergehenden Ansprüche, **dadurch gekennzeichnet, dass** die Längsachse des Verdampfergehäuses (4) in Richtung zum Materialablauf (28) aus der Horizontalen nach unten geneigt ist.

13. Verwendung des Dünnschichtverdampfers nach einem der Ansprüche 1 bis 12 zur Behandlung eines pharmazeutischen Produkts oder Lebensmittels.
